# EUROPEAN PATENT APPLICATION

(11) **EP 4 564 389 A1**
(43) Date of publication of application: **04.06.2025**
(21) Application number: 23213187.0
(22) Date of filing: 30.11.2023
(51) Int. Cl.: H01H 9/10, H01H 85/042, H02B 1/18, H02B 13/02, H01H 85/30, H01H 85/20, H01H 85/00

(54) **A FUSE COMPRISING AN OVERPRESSURE ACTIVATION DEVICE**

(71) Applicant: ABB SCHWEIZ AG, 5400 Baden (CH)
(72) Inventor: LINDQVIST, Björn, 3743 Skien (NO); PETTERSEN, Terje, 3734 Skien (NO); BJERKELY, Magnus, 3937 Porsgrunn (NO)
(74) Representative: Kransell & Wennborg KB

(57) **Abstract**

The present invention relates to a fuse (100) comprising: a fuse tube (102) forming an enclosure (104) arrangeable in a pressurized tank (108) kept at a higher pressure than the pressure in the enclosure (104) of the fuse tube (102), a fuse lid (112, 200, 300, 400) that seals an opening (114) to the enclosure (104) in the fuse tube (102), the fuse lid (112, 200, 300, 400) comprising: a striker pin (116) configured to move in the fuse lid (112, 200, 300, 400) in the event of fuse activation, a fuse lid housing (113, 428) accommodating the striker pin (116), a channel (202, 304, 401) through the fuse lid (112, 200, 300, 400) connecting the enclosure (104) in the fuse tube (102) and the environment (126) outside the fuse tube (102), and an overpressure activation device (204, 310, 418) arranged in the channel (202, 304, 401) or at an opening (206, 403) of the channel (202, 304, 401) to at least partly block the channel (202, 304, 401), the over pressure activation device (204, 310, 418) is configured to transition from a first state to a second state in response to an overpressure in the enclosure (104) of the fuse tube (102) caused by a leak between the fuse tube enclosure (104) and the pressurized tank (102).

## Description

### Field of the Invention

The present invention relates to an electric fuse.

### Background

Electric fuses for medium- and high voltage switchgear are typically installed in a fuse panel. The fuses include a fuse tube and a fuse lid that is fitted to the fuse tube which forms a sealed environment at atmospheric pressure. The fuse tube reaches to the rear of the fuse panel and into an overpressure tank which holds a dielectric gas medium for dielectric isolation between the phases of the fuses.

A leakage from the overpressure tank into the sealed fuse tube creates forces on the fuse lid which risks causing harm to an operator when removing the lid.

### Summary

In view of the above-mentioned and other drawbacks of the prior art, it is an object of the present invention to provide an electric fuse that at least partly alleviates the deficiencies with prior art.

According to a first aspect of the invention, there is provided a fuse comprising: a fuse tube forming an enclosure arrangeable in a pressurized tank kept at a higher pressure than the pressure in the enclosure of the fuse tube, a fuse lid that seals an opening to the enclosure in the fuse tube, the fuse lid comprising: a striker pin configured to move in the fuse lid in the event of fuse activation, a fuse lid housing accommodating the striker pin, a channel through the fuse lid connecting the enclosure in the fuse tube and the environment outside the fuse tube, and an overpressure activation device arranged in the channel or at an opening of the channel to at least partly block the channel, the over pressure activation device is configured to transition from a first state to a second state in response to an overpressure in the enclosure of the fuse tube caused by a leak between the fuse tube enclosure and the pressurized tank.

The present invention is at least partly based on the realization of forming a channel through the fuse lid. The channel allow pressure release from the fuse tube enclosure. This channel further provides for an overpressure activation device to function between two states which varies the channel configuration, or its ability to at least partly release pressure through or in the channel. The channel may as such allow for gas to travel through the channel, while the overpressure activation device is configured to vary the ability of the channel to transfer gas.

The pressure in the enclosure of the fuse tube may be at approximately atmospheric pressure.

The fuse tube may have one main opening which is where the fuse lid is arranged. In the lid, the main components of the fuse mechanism such as the striker pin is located. The striker pin is arranged to move forward, that is, away from the fuse tube enclosure in the event of the fuse being activated by an electric fault, and cause interruption of the electric current in its phase.

According to at least one embodiment, the channel may be in the striker pin. Thus, the striker pin may include a channel running along its longitudinal axis. The striker pin reaches through the fuse lid housing and is therefore one advantageous location for a channel that should reach to allow pressure release from the fuse tube enclosure.

According to at least one embodiment, the channel may be in the fuse lid housing. The fuse lid housing includes bulk material and is a suitable location for the channel, in particular, the channel may accommodate further devices.

According to at least one embodiment, the overpressure activation device may be a burst element configured to maintain the channel at least partly blocked in the first state and burst in the second state to release the overpressure in the fuse tube enclosure. Advantageously, when the pressure inside the fuse tube enclosure becomes too high, the burst element breaks so that pressure is released through the channel to the surrounding atmosphere.

According to at least one embodiment, wherein the burst element is configured to maintain the channel fully blocked in the first state.

The burst element may be part of the striker pin, for example, made in one piece and integrated with the striker pin. For example, the channel may be made to not reach entirely through the striker pin, leaving a disc at the end of the channel. This may be realized by not drilling the hole for the channel through the entire length of the striker pin. The material of the burst element is in this case the same as the material of the striker pin, preferably metallic. The diameter of the burst element which may be disc-shaped may be selected in the range of about 1 mm to about 10 mm, with a thickness selected in the range of about 0.1 mm to 2 mm.

Alternatively, the burst element may be a separate part, either metal or preferably plastic assembled in the channel with some means of sealing the channel. For example, a gasket may be used to seal the channel, or the burst element may be press-fitted or glued in the channel. The dimension of the burst element may be selected in the range of about 1 mm to about 10 mm, with a thickness selected in the range of about 0.1 mm to 2 mm. The shape of the burst element depends on the shape of the opening on the channel, where basic shapes such as circular, square, triangle, disc, etc., are suitable.

According to at least one embodiment, the burst element may be arranged at the inner opening of the channel facing towards the enclosure of the fuse tube. In other words, the channel may comprise an inner opening which is the opening located the fuse tube, and an outer opening which is located outside the fuse tube on the opposite side of the fuse lid, e.g., in the surrounding atmosphere outside the fuse tube. Preferably, to keep the burst element protected, the burst element is arranged at the inner opening.

The burst element may be burst disc, that is, a disc-shaped burst element.

According to at least one embodiment, the overpressure activation device may comprise a piston arranged in a piston volume in the channel, and a pin connected to the piston, wherein the transition is that the pin moves in the channel in response to the overpressure. The piston volume may be formed as a portion of the channel. The piston may move along the channel, in the piston volume. Especially, in the event of an overpressure in the fuse tube, the piston is forced towards to outer opening of the channel by the overpressure inside the fuse tube. The pin is attached to or formed in once piece with the piston, this, the pin also moves in the channel. The pin is preferably formed so that a free end of the pin points towards the outer opening of the channel. The opposite end of the pin is a fixed end at or on the piston.

According to at least one embodiment, the pin may move at least partly out from the channel to provide an indication of the overpressure outside the fuse tube. Thus, in response to the piston moving due to overpressure, the pin may protrude out from the outer opening of the channel. This provides an indicating to an operator that an overpressure is present inside the fuse tube. Furthermore, the motion of piston provides some pressure relief.

According to at least one embodiment, the overpressure activation device may further comprise a spring that biases the piston in the channel towards the inner opening in the channel facing the enclosure in the fuse tube. Thus, once an overpressure of certain magnitude is present in the fuse tube, the piston moves and compresses the spring. Thus, the spring force is overcome by the force from the overpressure in the fuse tube. In absence of the overpressure of certain magnitude, the piston stays in its initial position and the pin does not protrude out from the channel. The spring may be tailored according to the allowable overpressure. Towards the inner opening here means upstream in the channel where the inner opening is located. Downstream of the channel is in the direction of the outer opening facing the outside environment.

According to at least one embodiment, the piston volume is wider than adjacent portions of the channel. In other words, the piston volume may be a separate chamber in the channel where the piston is housed.

According to at least one embodiment, the piston may move from a rear position to a forward position in the piston volume in response to the overpressure, and a sealing member is arranged in the piston volume to at least partly seal the channel when the piston is in the forward position. Sealing the piston volume ensures that the pressure is entirely lost in the piston volume and the spring pushes the piston back and the pin back into the channel. However, a small pressure release may be allowed through the seal.

According to at least one embodiment, the sealing member may be annular and may be arranged on a shoulder in the piston volume circumventing a narrower portion of the channel, and the piston applies a force on along an entire circumference of the annular sealing member when the piston is in the forward position. In one example, the sealing member may be an O-ring.

In another embodiment, the sealing member is attached to the piston.

According to at least one embodiment, the overpressure activation device may be part of the striker pin, the striker pin comprising a piston at a rear end portion of the striker pin and a sealing member sealing the piston to a side wall of a piston volume, wherein the piston and striker pin is moved forwards in the fuse lid in response to an overpressure in the enclosure of the fuse tube. Advantageously, the striker pin serves multiple purposes, the electric fuse activation, pressure release, and overpressure indication.

According to at least one embodiment, the fuse may comprise at least one decompression chamber connected with the piston volume through a side channel in the fuse lid housing. The decompression chambers allow for gas to escape into the chamber to allow for the striker pin comprising the piston to move forward in response to an overpressure behind the piston of the striker.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 illustrates an example electric fuse according to embodiments of the invention;
Fig. 2A illustrates on example fuse lid according to embodiments of the invention;
Fig. 2B is a close-up view of the fuse lid in fig. 2A.
Fig. 3A illustrates on example fuse lid according to embodiments of the invention;
Fig. 3B is a close-up view of the fuse lid in fig. 3A with the overpressure activation device in a first state;
Fig. 3C is a close-up view of the fuse lid in fig. 3A with the overpressure activation device in a second state; and
Fig. 4 illustrates on example fuse lid according to embodiments of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

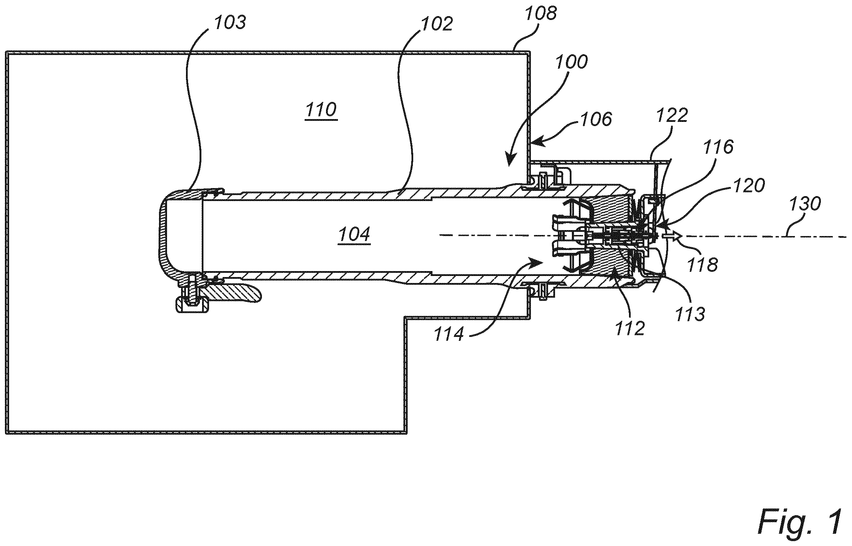

Fig. 1 is a cross-section of an electric fuse 100 comprising a fuse tube 102 forming an enclosure 104. The fuse tube 102 is arranged in a fuse panel 106 where more than one electric fuse may be arranged. The fuse panel is part of a pressurized tank 108 enclosing a volume 110 kept at a pressure higher than the pressure in the fuse tube enclosure 104. In one example, the pressure in the fuse tube enclosure 104 is approximately atmospheric pressure.

The electric fuse 100 further comprises a fuse lid 112 that seals an opening 114 to the enclosure 104 in the fuse tube 102. That is, the fuse tube 102 is a sealed enclosure 104 with preferably atmospheric pressure. The fuse tube 102 is sealed at one end by a cap 103.

The electric fuse 100 comprises a striker pin 116 accommodated in a fuse lid housing 113 and reaches longitudinally through the fuse lid housing 113. The striker pin 116 is movable along the longitudinal axis 130. When the fuse 100 is actuated or activated, i.e. "blows", the striker pin 116 is ejected forwards, in the forwards direction 118 away from the fuse tube 102 along the longitudinal axis 130. The forward motion of the striker pin 116 cause actuation of a lever 120 coupled to a mechanism 122 that breaks the electric current in the electric phase of the fuse 100.

The tank 108 is pressurized with a gas to ensure dielectric withstand between different phases in the fuse panel. A typical application is for so-called gas insulated switchgear, GIS, in the voltage range 5 kV to 50 kV, such as 12 kV, 24 kV, or 36 kV, or 40.5 kV.

The gas serving as a dielectric medium can be air, dry air, N2, CO2 or mixture of two or three of N2, O2, and CO2. In an example implmentation, the dielectric medium is a mixture of air, fluoroketones and/or AirPlus

It is desirable to increase the pressure difference between the tank volume 110 and the fuse tube enclosure 104, especially when moving to more environmentally friendly gases which require higher pressures to achieve adequate insulation between the phases. However, higher pressures are also associated with higher risks in case of a leak between the overpressure tank 108 and the sealed fuse tube 102. For example, in the event of a leak, the overpressure will create forces on the fuse lid 112 which creates a possibility of the fuse lid 112 causing harm to the operator removing the fuse lid 112. Embodiments of the present disclosure aim to reduce the risk of a potentially harmful situation due to a leak between the the overpressure tank 108 and the sealed fuse tube 102.

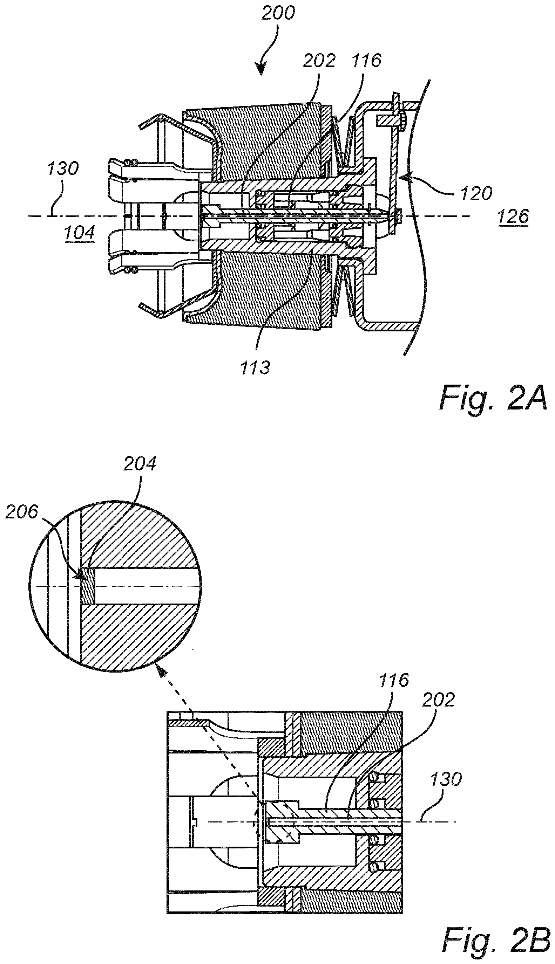

Fig. 2A and the close-up view in fig. 2B illustrates an example fuse lid 200 of one electric fuse according to an embodiment. The fuse lid 200 comprises the striker pin 116 that reaches through the fuse lid 200, from the inside to the outside environment 126.

A channel 202 through the fuse lid 200 connects the enclosure 104 in the fuse tube 102 and the environment 126 outside the fuse tube 102. In this embodiment, the channel 202 is in the striker pin 116. More specifically, the channel lies along the longitudinal axis 130 of the striker pin 116.

As is better seen in the close-up view in fig. 2B, an overpressure activation device realized as a burst element, here in the form of a burst disc 204 is arranged in the channel 202 or more specifically at an opening 206 of the channel 202. The opening 206 is the inner opening of the channel 202 facing towards the enclosure 104 of the fuse tube 102.

The burst disc 204 is arranged to block, at least partly, or in some embodiments fully block the channel 202 such that in a first state when the burst disc is intact, a certain pressure difference between the enclosure 104 of the fuse tube 102 and the outside surroundings 126 is allowed. The outside surroundings 126 may be at atmospheric pressure. Preferably, the burst disc 204 fully blocks the channel to ensure a dielectric barrier towards the operator side at the outside surroundings 126. The burst disc is preferably rounded or circular, i.e., disc-shaped. The burst disc 204 may either be made as a part of the striker pin, that is, made in one piece with the striker pin, or the burst disc is a separate part inserted into the channel 202.

However, in response to an overpressure in the enclosure 104 of the fuse tube 102 that may be caused by a leak between the fuse tube 102 enclosure 104 and the pressurized tank 108, the burst disc 204 breaks. The breaking of the burst disc 204 is the transition to the second state. When the burst disc 204 breaks, a fluid connection between the fuse tube 102 enclosure 104 and the outside surroundings 126 is provided through the channel 202, thereby provide a path for pressure release so that the pressure in the enclosure 104 and the outside surroundings 126 is equalized.

In other words, the burst disc 204 is designed and dimensioned to maintain the channel 202 at least partly blocked in the first state when the difference in pressure between the enclosure 104 and the outside surroundings 126 is below some predetermined threshold and burst in the second state to release the overpressure in the fuse tube 102 enclosure 104.

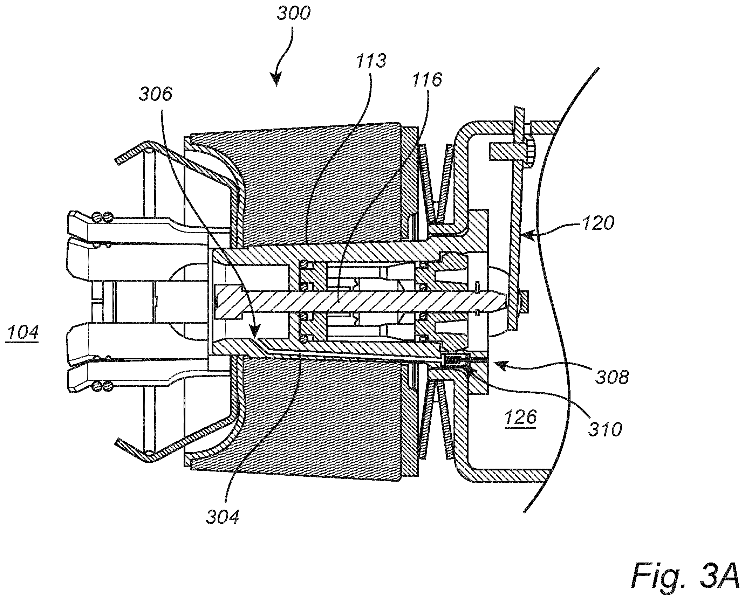

Fig. 3A illustrates an example fuse lid 300 of an electric fuse according to an embodiment. The fuse lid 300 comprises the striker pin 116 that reaches through the fuse lid 300, from the inside 104 to the outside environment 126.

The fuse lid 300 further comprises the fuse lid housing 113 that accommodates the striker pin 116.

In this embodiment, the channel 304 through the fuse lid 300 is through the fuse lid housing 113 to connect the enclosure 104 in the fuse tube 102 and the environment 126 outside the fuse tube 102. The channel comprises a first opening, e.g., an inlet 306 for pressure relief facing into and in fluid connection with the enclosure 104 in the fuse tube 102, and a second opening e.g., an outlet 308 towards the outside environment 126.

In this embodiment, the overpressure activation device 310 is arranged in the channel 304 to at least partly block the channel 304.

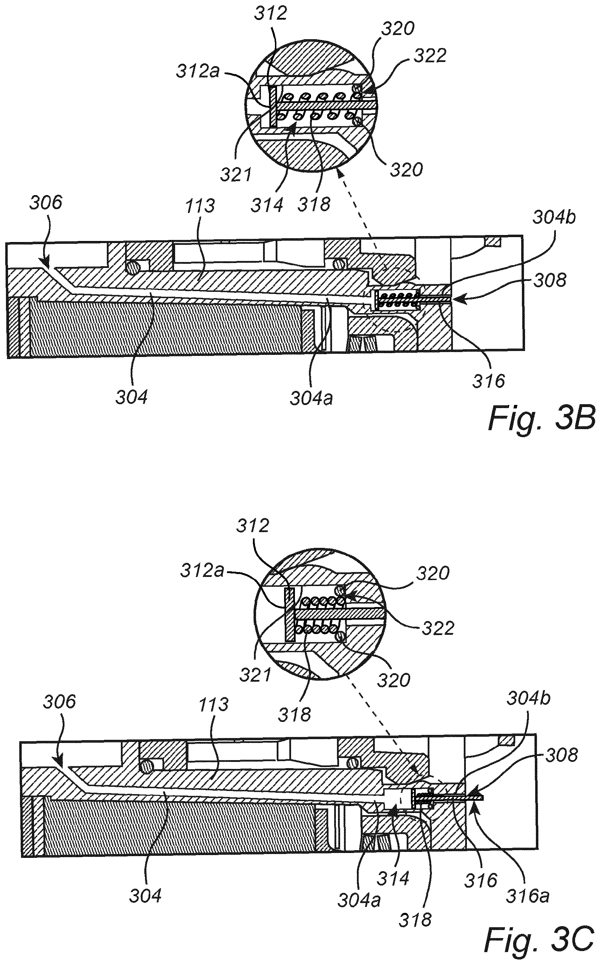

Turning to fig. 3B which is a close-up view of the channel 304 in the fuse lid housing 113. The overpressure activation device 310 comprises a piston 312 arranged in a piston volume 314 in the channel 304. Furthermore, a pin 316 is connected to the piston 312. The pin 316 and piston 312 may be made as a single device, for example formed in one piece.

The piston volume 314 constitutes a wider part of the channel 304 to accommodate the piston 312. The width, or diameter of the piston 312 is smaller than the width or diameter of the piston volume 314 but larger than the width or diameter of the adjacent portions 304a,b of the channel 304. In other words, the piston 312 cannot escape out from the piston volume 314.

The overpressure activation device 310 further comprises a spring 318 that biases the piston 312 in the channel 304 towards the opening 306 in the channel 304 facing the enclosure 104 in the fuse tube 102. The spring 318 is concentrically arranged with and radially outside the pin 316. That is, the pin is arranged through the center hole of the axial spring 318.

The transition of the overpressure activation device 310 from a first state to a second state is that the piston 312 and the pin 316 moves in the channel 304 in response to the overpressure in the enclosure 104 of the fuse tube 102 caused by a leak between the fuse tube enclosure 104 and the pressurized tank 108.

Fig. 3B illustrates the overpressure device 310 in its first state where the piston 312 is in a rear position, and being held in the rear position by the spring 318 which prevent the piston to move forward towards the front opening 308 of the channel 304.

Fig. 3C illustrates the overpressure device 310 in its second state where the piston 312 is in a forward position. The overpressure in the fuse tube enclosure 104 connected with the opening 306 force the piston 312 forward in the piston volume 314. The piston 312 has compressed the spring 318. That is, the overpressure exerts a force on a rear side 312a of the piston that exceeds the spring force of the spring 318. This causes the pin 316 to move at least partly out from the channel 304 to provide an indication of the overpressure outside the fuse tube 102. At least partly here indicates that only a portion 316a of the pin 316 protrudes out through the opening 308 of the channel 304. The motion of the piston 312 provides a partial pressure relief from inside the fuse tube enclosure 104.

That the pin 316 protrudes out from the channel 304 to the outside surroundings serves as an indication to a user that there is an overpressure inside the fuse tube enclosure 104. Thus, the user should proceed with care when removing the fuse lid 300.

A sealing member 320 is arranged in the piston volume 314 to at least partly seal the channel 304 when the piston 312 is in the forward position. The piston 312 pushes against the sealing member 320 under the influence of the overpressure in the fuse tube enclosure 104. The overpressure is thus alsoin the piston volume 314 behind the piston 312, that is the part of the volume 314 facing the rear side 312a of the piston 312. The piston 312 thus moves from a rear position, in fig. 3B, to a forward position, in fig. 3C, in the piston volume 314 in response to the overpressure, and once in the forward position the piston 312 and the sealing member 320 seal, at least partly, the channel 304. This provides for maintaining the piston 312 in the forwards position and the pin 316 to remain protruding out through the opening 308 without the spring 318 pushing the piston 312 back rearwards in the piston volume 314.

The sealing member 320 is annular and is arranged on a shoulder 322 in the piston volume circumventing a narrower portion 304b of the channel 304, where narrower means that it is narrower than the piston volume 314. The narrower position 304b constituting an opening to the piston volume 314. The piston 312 applies a force on along an entire circumference of the annular sealing member 320 when the piston 312 is in the forward position. The annular sealing member 320 may for example be an O-ring.

In other possible implementation, the sealing member the sealing member 320 is attached to the piston 312 to seal between the piston and the wall 321 of the piston volume 314.

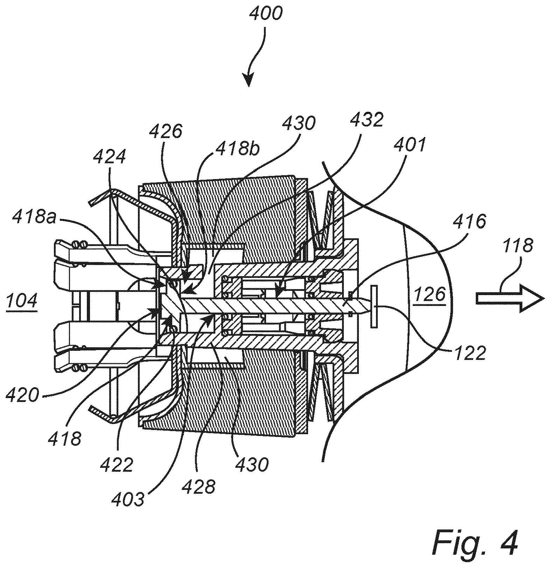

Fig. 4 illustrates an example fuse lid 400 of an electric fuse according to an embodiment. The fuse lid 400 comprises the striker pin 416 that reaches through the fuse lid 400, from the inside 104 to the outside environment 126 through a channel 401 in the fuse lid housing 428. The channel 401 has an opening 403.

The striker pin 416 comprises an overpressure activation device in the form of a piston 418 at a rear end portion 420 of the striker pin 416. The piston 418 is located near the inner opening 403 of the channel 401 facing towards the fuse tube enclosure 104. Furthermore, a sealing member 422 such as a gasket is arranged in a groove of the piston 418 to seal against a side wall 424 of a piston volume 426. The piston volume 426 is located at a rear end of the fuse lid housing 428. The rear side 418a of the piston 418 faces towards the fuse tube enclosure 104 and the front side 418b of the piston 418 faces in the opposite direction.

In the event of a leak between the fuse tube 102 and the overpressure tank 108, the overpressure exerts a force on the rear side 418a of the piston 418 serving as overpressure activation device, thus pushing the piston 418 and thereby also the striker pin 416 forwards 118 in the fuse lid 400 further towards the outside environment 126. The motion of the striker pin 416 activates a mechanism 122 that breaks the electric current in the electric phase of the fuse.

In order to secure low pressure in the piston volume 426 in front of the piston 418, that is the part of the piston volume 426 facing the front side 418b of the piston 418, the fuse lid 400 comprises at least one decompression chamber 430 connected with the piston volume 426 through a side channel 432 in the fuse lid housing 428.

Thus, as the piston 418 is pushed forward, towards the outside environment 126 by an overpressure in the fuse tube 102 volume 104, gas in the piston volume 426 can escape out through the side channel 432 to the decompression chamber 430. This prevents the pressure in the piston volume 426 in front of the piston 418, facing the side 418b, to become too high and prevent further motion of the piston 418.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A fuse (100) comprising:
a fuse tube (102) forming an enclosure (104) arrangeable in a pressurized tank (108) kept at a higher pressure than the pressure in the enclosure (104) of the fuse tube (102),
a fuse lid (112, 200, 300, 400) that seals an opening (114) to the enclosure (104) in the fuse tube (102), the fuse lid (112, 200, 300, 400) comprising:
a striker pin (116) configured to move in the fuse lid (112, 200, 300, 400) in the event of fuse activation,
a fuse lid housing (113, 428) accommodating the striker pin (116),
a channel (202, 304, 401) through the fuse lid (112, 200, 300, 400) connecting the enclosure (104) in the fuse tube (102) and the environment (126) outside the fuse tube (102), and
an overpressure activation device (204, 310, 418) arranged in the channel (202, 304, 401) or at an opening (206, 403) of the channel (202, 304, 401) to at least partly block the channel (202, 304, 401), the over pressure activation device (204, 310, 418) is configured to transition from a first state to a second state in response to an overpressure in the enclosure (104) of the fuse tube (102) caused by a leak between the fuse tube enclosure (104) and the pressurized tank (102).

2. The fuse (100) according to claim 1, wherein the channel (202) is in the striker pin (116).

3. The fuse (100) according to claim 1, wherein the channel (304, 401) is in the fuse lid housing (113, 428).

4. The fuse (100) according to any one of claims 1 to 3, wherein overpressure activation device is a burst element (204) configured to maintain the channel at least partly blocked in the first state, and burst in the second state to release the overpressure in the fuse tube enclosure.

5. The fuse according to claim 4, wherein the burst element is configured to maintain the channel fully blocked in the first state.

6. The fuse (100) according to any one of claims 4 and 5, wherein the burst element (204) is arranged at the inner opening (206) of the channel (202), the opening (206) facing towards the enclosure (104) of the fuse tube (102).

7. The fuse according to any one of claims 1 to 3, wherein the overpressure activation device (310) comprises a piston (312) arranged in a piston volume (314) in the channel (304), and a pin (316) connected to the piston (312), wherein the transition is that the pin (316) moves in the channel (304) in response to the overpressure.

8. The fuse according to claim 7, wherein the pin (316) moves at least partly out from the channel (304) to provide an indication of the overpressure outside the fuse tube.

9. The fuse according to any one of claims 7 and 8, wherein the overpressure activation (310) device further comprises a spring (318) that biases the piston (312) in the channel towards the opening (306) in the channel (304) facing the enclosure (104) in the fuse tube (102).

10. The fuse according to any one of claims 7 to 9, wherein the piston volume (314) is wider than adjacent portions (304a,b) of the channel (304).

11. The fuse according to any one of claims 7 to 10, wherein the piston (312) moves from a rear position to a forward position in the piston volume (314) in response to the overpressure, and a sealing member (320) is arranged in the piston volume (314) to at least partly seal the channel (304) when the piston (312) is in the forward position.

12. The fuse according to claim 11, wherein the sealing member (320) is annular and is arranged on a shoulder (322) in the piston volume (314) circumventing a narrower portion (304b) of the channel (304) compared to the piston volume 314, and the piston (312) applies a force along an entire circumference of the annular sealing member (320) when the piston (312) is in the forward position, or wherein the sealing member is attached to the piston (312).

13. The fuse according to claim 11, wherein the sealing member is an O-ring.

14. The fuse according to any one of claims 1 to 3, wherein the overpressure activation device (418) is part of the striker pin (416), the striker pin comprising a piston (418) at a rear end portion (420) of the striker pin (416) and a sealing member (422) sealing the piston (418) to a side wall (424) of a piston volume (426), wherein the piston (418) and striker pin (416) is moved forwards in the fuse lid (400) in response to an overpressure in the enclosure (104) of the fuse tube (102).

15. The fuse according to claim 14, comprising at least one decompression chamber (430) connected with the piston volume (426) through a side channel (432) in the fuse lid housing (428).
